# EUROPÄISCHE PATENTSCHRIFT

(11) **EP 2 181 298 B1**
(45) Veröffentlichungstag und Bekanntmachung des Hinweises auf die Patenterteilung: **16.09.2015**
(21) Anmeldenummer: 08784872.7
(22) Anmeldetag: 18.07.2008
(51) Int. Cl.: F26B 13/10

(54) **VERFAHREN, TROCKNUNGSOFEN ZUM TROCKNEN EINER WARENBAHN MIT HEISSER LUFT SOWIE VERWENDUNG DER VORRICHTUNG**
METHOD, DRYING OVEN FOR DRYING A MATERIAL WEB WITH HOT AIR, AND USE OF THE APPARATUS
PROCÉDÉ, FOUR DE SÉCHAGE D'UNE BANDE DE MATÉRIAU AVEC DE L'AIR CHAUD ET UTILISATION DU DISPOSITIF

(30) Priorität: 20.07.2007 CH 11652007
(43) Veröffentlichungstag der Anmeldung: 05.05.2010
(73) Patentinhaber: Strahm Textile Systems AG, 8574 Lengwil (CH)
(72) Erfinder: NIKLAUS, Michael, CH-8472 Seuzach (CH); PLUGACHEV, Kuzma, CH-9554 Tägerschen (CH)
(74) Vertreter: Gachnang, Hans Rudolf
(86) Internationale Anmeldenummer: PCT/EP2008/005892
(87) Internationale Veröffentlichungsnummer: WO 2009/012943

(56) Entgegenhaltungen:
- EP-A- 0 177 774
- EP-A- 1 134 529
- DE-A1- 19 623 303
- FR-A- 1 546 323
- US-A- 4 270 283
- US-A1- 2003 079 372

## Beschreibung

Gegenstand der Erfindung ist ein Verfahren zum Trocknen einer Warenbahn, gemäss Oberbegriff des Patentanspruchs 1. Gegenstand der Erfindung ist weiter ein Trocknungsofen zum Trocknen einer Warenbahn, gemäss Oberbegriff des Patentanspruchs 7, sowie eine Verwendung der Vorrichtung, gemäss Patentanspruch 12.

Warenbahnen, die einer Nassbehandlung unterzogen worden sind, müssen anschliessend getrocknet werden. Die Trocknung soll möglichst rasch und mit minimalem Energieverbrauch erfolgen.

Aus dem Stand der Technik ist es bekannt, die Warenbahn durch eine Mehrzahl hintereinander geschalteter Trocknungskammern hindurchzuführen und in jeder Trocknungskammer mit einer geeigneten Heizung trockene Frischluft, die von einem Gebläse angesaugt wird, einzublasen, allenfalls mit Umluft zu mischen, aufzuheizen und nochmals durch das Material hindurch oder entlang diesem zu fahren und danach aus jeder Kammer als feuchte Abluft an die Umgebung abzugeben. Auf diese Weise kann die Warenbahn stufenweise, d.h. von Kammer zu Kammer getrocknet werden. Nachteilig an diesem Verfahren ist die Tatsache, dass in jeder Kammer die aus der Umgebung angesaugte Frischluft mit viel Energie aufgeheizt und danach die aufgeheizte feuchte Luft an die Umgebung abgegeben wird. Der Energieverbrauch ist daher sehr gross. Die Trocknungsgeschwindigkeit ist klein und die Umluft hat eine fast gleich hohe Feuchte wie die Abluft.

Es ist weiter bekannt, an Trocknungsöfen Wärmerückgewinnungsanlagen anzubauen, um die warme Abluft zum Aufheizen/Erwärmen der kalten nassen Warenbahn nutzen zu können. Solche separaten Rückgewinnungsanlagen sind aufwändig und teuer und sie benötigen einerseits für den Transport der Warenbahn und andererseits für die Umwälzung der Abluft zusätzlich Energie. Deren Wirkungsgrad ist bei solchen Anlagen nicht optimal.

Im Patent US 4,270,283 A ist ein Verfahren und eine Anlage zum Trocknen einer Warenbahn beschrieben, welche die Merkmale der Oberbegriffe der Patentansprüche 1 und 7 aufweist. Jeder der in Serie geschalteten Trocknungskammern ist ein Gebläse zugeordnet, mit dem Luft von unterhalb der Warenbahn angesaugt und der benachbarten Trocknungskammer oberhalb der Warenbahn zugeführt wird. Ein Teil der Luft wird dabei abgezweigt und der selben Trocknungskammer, aus der sie angesaugt wurde, oberhalb der Warenbahn wieder zugeführt. Die Gebläse dienen somit gleichzeitig dem Transport der Luft durch die Anlage und dem Umwälzen der Luft in den Kammern. Das Verhältnis der transportierten zur umgewälzten Luftmenge ist nicht veränderbar. Durch Verändern der Drehzahlen der Gebläse ist die transportierte Luftmenge sowie die Druckdifferenz zwischen benachbarten Trocknungskammern einstellbar.

Bekannterweise wird durch vorheriges Aufheizen/Erwärmen einer nassen Warenbahn die eigentliche Trocknung begünstigt. Bekannt ist auch, dass die Geschwindigkeit der Trocknung von der Feuchte der Trocknungsluft und der Feuchte der textilen Warenbahn abhängt. Diese Erkenntnisse macht sich die Anlage gemäss US 4,270,283 A zu eigen, indem sie nämlich auch die bereits sehr feuchte Trocknungsluft zum Antrocknen der nassen, in die Anlage eintretenden Warenbahn ausnutzt. Dies geschieht durch das stufenweise Anfeuchten der an der ausgangsseitigen Kammer eingesaugten Frischluft und Hindurchführen der Luft von der letzten Kammer zur ersten Kammer im Gegenstrom zur Transportrichtung der Warenbahn. Der Trocknungsvorgang kann dadurch mit hoher Trocknungsgeschwindigkeit und mit wesentlich weniger Energie erfolgen.

Eine Aufgabe der vorliegenden Erfindung besteht nun darin, ein Verfahren sowie ein Trocknungsofen und dessen Verwendung zu schaffen, mit denen eine Warenbahn mit noch höherer Effizienz und geringerem Energieaufwand getrocknet werden kann.

Gelöst wird diese Aufgabe durch ein Verfahren mit den Merkmalen des Patentanspruchs 1, einen Trocknungsofen zur Durchführung des Verfahrens gemäss den Merkmalen des Anspruchs 7 sowie eine Verwendung des Trocknungsofens gemäss Patentanspruch 12.

Indem erfindungsgemäss die Umwälzung der Luft in jeder der Trocknungskammern durch jeweils ein der betreffenden Kammer zugeordnetes Luftumwälzgebläse erfolgt und das Einblasen oder Einsaugen trockener Luft in die letzte Trocknungskammer oder das Ausblasen oder Absaugen der Luft aus der ersten Trocknungskammer durch mindestens ein weiteres Gebläse erfolgt, eröffnet die Erfindung erweiterte Möglichkeiten der Steuerung bzw. Regelung des Trocknungsprozesses. Erfindungsgemäß lässt sich die Menge der durch den Trocknungsofen transportierten Luft in Abhängigkeit der Abluftfeuchtigkeit regeln und unabhängig davon kann die Menge der in jeder Trocknungskammer umgewälzten Luft in Abhängigkeit der Ablufttemperatur geregelt werden. Auch kann im Gegensatz zum bekannten Stand der Technik das erfindungsgemässe Verfahren bzw. der erfindungsgemässe Trocknungsofen so betrieben werden, dass in jeder Trocknungskammer der Druck geringer ist als der Umgebungsdruck. Dadurch werden Energieverluste durch über die Warenbahn austretende warme Luft vermieden.

Zudem ist es in einer besonderen Ausgestaltung der Erfindung möglich, eine oder mehrere Trocknungskammern auf der Eingangsseite der Warenbahn in den Trocknungsofen nicht aufzuheizen oder auf Temperatur zu halten, sondern dort nur die Luft umzuwälzen. Damit fungiert bzw. fungieren diese Trocknungskammer(n) zum Aufwärmen der nassen Textilbahn mit feuchter heisser Luft aus den übrigen Kammern und es kann damit eine Wärmerückgewinnung erreicht werden wie in einer separaten Anlage.

Anhand eines illustrierten Ausführungsbeispiels wird die Erfindung näher erläutert.

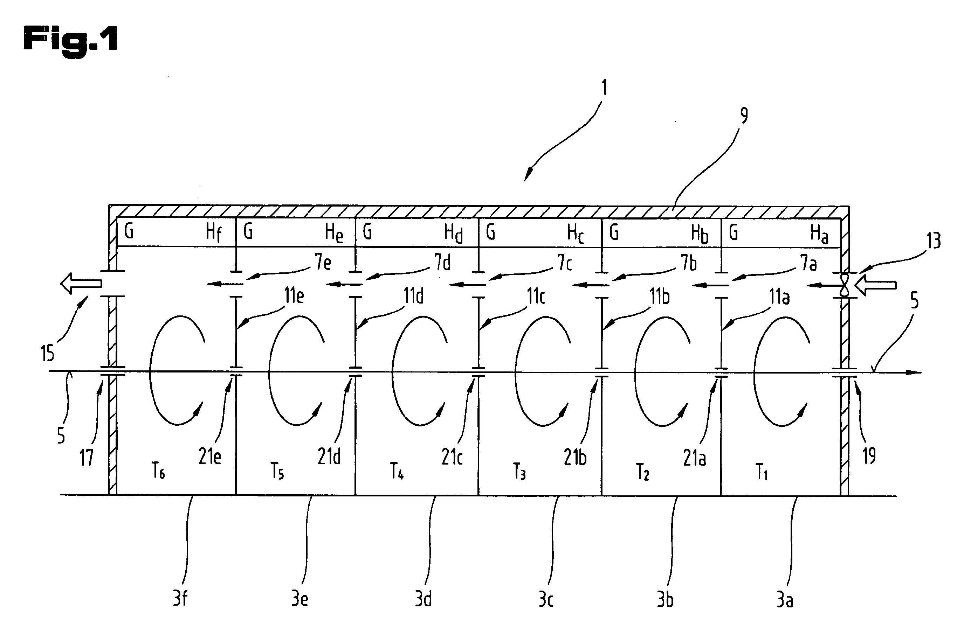

Es zeigt die einzige Figur 1 einen schematischen Längsschnitt durch einen Trocknungsofen mit sechs Trocknungskammern. Die Trocknungskammern können beispielsweise Düsenkästen umfassen, wie sie in der WO 2005/003661 A1 beschrieben sind.

Mit Bezugszeichen 1 ist ein Trocknungsofen mit beispielsweise sechs in Serie angeordneten Trocknungskammern 3a-3f bezeichnet. Mit einer horizontalen Linie ist schematisch die Warenbahn 5 angedeutet, welche von links nach rechts die sechs Trocknungskammern 3a-3f durchquert. Ein für den Transport notwendiges Transportmittel, z.B. ein Transportband, ist der besseren Übersichtlichkeit halber nicht dargestellt. Die beispielsweise sechs Trocknungskammern 3a bis 3f liegen dicht bei dicht nebeneinander und sind durch Verbindungsöffnungen 7a bis 7e untereinander verbunden. Die Gesamtheit aller Trocknungskammern 3a-3f ist allseitig von einem gut Wärme isolierenden Mantel 9 umgeben und gegen die Umgebung luftdicht verschlossen. Selbstverständlich könnten auch die Zwischenwände 11a bis 11e isoliert sein. Ebenso auch der Bodenbereich der einzelnen Trocknungskammern 3a-3f.

In jeder Trocknungskammer 3a-3f sind ein Gebläse G und eine Heizung H eingebaut, welche individuell ansteuerbar sind. Die Gebläse G dienen dazu, die von den Heizungen erwärmte Luft innerhalb der einzelnen Trocknungskammern 3a-3f umzuwälzen.

Mit einem weiteren Gebläse 13 wird an der Aussenwand der austrittsseitigen Trocknungskammer 3a Frischluft von der Umgebung in die letzte Kammer 3a eingeblasen. An der Aussenwand der Eintrittsseite der Warenbahn 5 in die erste Trocknungskammer 3f wird die aufgeheizte und nun feuchte Luft durch die Öffnung 15 an die Umgebung abgegeben. Diese beiden Öffnungen an der ersten und der letzten Trocknungskammer sind die einzigen Verbindungen der Kammerninnenwände zur Umgebung.

Selbstverständlich kann das Gebläse auch oder nur in der Öffnung 15 angeordnet sein. In diesem Fall, in dem also das Gebläse an der Öffnung 15 angeordnet ist und die durch die Öffnung eintretende Luft durch den Trocknungsofen saugt, kann der Trocknungsofen mit Unterdruck betrieben werden. Das heisst, dass in jeder der Trocknungskammern 3a bis 3f ein tieferer Druck herrscht als in der Umgebung des Trocknungsofens. Dadurch werden Energieverluste durch aus einzelnen Trocknungskammern in die Umgebung austretende warme Luft vermieden. Die Warenbahn 5, welche in der Figur von links nach rechts, also in entgegengesetzter Richtung zum Fluss der Trocknungsluft, die Kammern des Trocknungsofens 1 durchläuft, wird sowohl an der Eintrittsöffnung 17 als auch an der Austrittsöffnung 19 derart geführt, dass kein wesentlicher Luftaustausch mit Umgebungsluft zwischen der Eintrittskammer 3f und der Austrittskammer 3a mit der Atmosphäre eintreten kann.

Nachfolgend wird die Funktionsweise des Trocknungsofens 1 erläutert. Die Warenbahn 5 wird durch ein nicht dargestelltes Transportmittel an der Eintrittsöffnung 17 (linke Seite des Trocknungsofens 1) in die erste Trocknungskammer 3f eingeleitet. Von dort durchläuft sie nacheinander sämtliche Trocknungskammern 3e, 3d, 3c, 3b, 3a, bis sie an der Austrittsöffnung 19 wieder aus dem Trocknungsofen 1 herausgeführt wird. An den Durchtrittsstellen (Öffnungen 21 e bis 21 a) durchdringt die Warenbahn 5 die jeweiligen Zwischenwände 11 a bis 11e.

Die letzte Trocknungskammer 3a, an deren Aussenwand die Warenbahn 5 den Trocknungsofen 1 verlässt, wird durch die Heizung Ha auf die Temperatur T1 aufgeheizt und die aufgeheizte Luft, welche durch das Gebläse 13 in diese Kammer eingeblasen wird, in der Kammer vom kammerinternen Gebläse G umgewälzt. Durch den Überdruck in der Trocknungskammer 3a, hervorgerufen durch das Gebläse 13, gelangt die Luft von der Kammer 3a durch eine vorzugsweise schlitzförmige Verbindungsöffnung 7a zur Kammer 3b. In dieser kann, falls notwendig, durch die Heizung Hb die durch den Trocknungsvorgang abgekühlte Luft wieder auf die Temperatur T1 oder weiter auf die Temperatur T2 aufgeheizt und durch das Gebläse in der Kammer 3b umgewälzt werden. Durch die jeweiligen Druckgefälle zu den nachfolgenden Kammern 3c bis 3f gelangt die in den einzelnen Kammern aufgeheizte und mit Feuchtigkeit aus der Warenbahn 5 stets feuchtere Luft bis zur ersten Trocknungskammer 3f, wo sie durch die Öffnung 15 in die Umgebung gelangt.

Was geschieht mit der Warenbahn 5, welche durch die Eintrittsöffnung 17 in die Trocknungskammer 3f eintritt? Mit der in der Warenbahn-eintrittsseitigen Trocknungskammer 3f bereits auf eine Temperatur T6 erwärmten, aber auch bereits sehr feuchten Luft wird die nasse Warenbahn 17 aufgeheizt und gelangt durch die Zwischenwand 11e in die Trocknungskammer 3e und von dort durch alle übrigen Trocknungskammern mit jeweils immer geringerer Luftfeuchte bis sie schlussendlich in der Trocknungskammer 3a, in welcher sehr trockene Frischluft auf eine Temperatur T 1 erwärmt und umgewälzt wird, anlangt.

Durch die Tatsache, dass in jeder Trocknungskammer ein erheblicher Unterschied der relativen Feuchte der Luft und der Warenbahn vorliegt, kann ein Wasserentzug trotz hoher Feuchte der Luft auch in den eintrittsseitigen Kammern erreicht werden, ohne dass zusätzlich trockene und neu erwärmte Frischluft benötigt wird.

Durch geeignete Temperatur- und/oder Feuchtigkeitssensoren kann die jeweilige Temperatur in den einzelnen Trocknungskammern 3a-3f, falls notwendig, an die Restfeuchtigkeit der zu trocknenden Warenbahn 5 angepasst werden. Bei niedrigerer Transportgeschwindigkeit oder geringerer Anfangsfeuchte der Warenbahn 5 kann ohne weiteres die Heizung Hf in der ersten Trocknungskammer 3f ausgeschaltet und dadurch Energie gespart werden. Alternativ kann sogar ganz auf die Heizung Hf in der ersten Trocknungskammer 3f verzichtet werden. In diesem Falle durchfliesst die feuchte Luft aus der zweiten Trocknungskammer 3e die erste Trocknungskammer 3f und erwärmt die zulaufende Warenbahn 17 in der Trocknungskammer 3f bereits auf ein Temperatumiveau, welches die Verdunstung des Wassers aus der Warenbahn 5 sehr begünstigt.

Gleichzeitig kann dadurch eine Wärmerückgewinnung aus der abfliessenden Luft erreicht werden, ohne dass dazu eine separate teure Anlage notwendig ist.

Bei einer geeigneten Ausbildung der Luftführung in den einzelnen Kammern könnten die Zwischenwände ganz oder teilweise entfallen.

## Patentansprüche

1. Verfahren zum Trocknen einer Warenbahn (5) in einem Trocknungsofen (1) mit mehreren in Serie hintereinander geschalteten Trocknungskammern oder -bereichen (3), in denen aus der Umgebung angesaugte Luft erwärmt und umgewälzt wird, um der Warenbahn (5) Feuchtigkeit zu entziehen und gebrauchte feuchte Luft in die Umgebung abzugeben, wobei die Warenbahn (5) die Trocknungskammern oder -bereiche (3) nacheinander, getragen von einem Transportmittel, durchläuft und wobei trockene Luft in die letzte Trocknungskammer (3a), von welcher aus die Warenbahn (5) den Trocknungsofen (1) verlässt, eingeblasen oder eingesaugt, erwärmt und umgewälzt wird und anschliessend von der letzten Trocknungskammer (3a) nacheinander zu den anschliessenden Trocknungskammern (3b bis 3f) geleitet und in diesen jeweils umgewälzt wird, bevor die an der letzten Trocknungskammer (3a) eingeblasene oder eingesaugte Luft an der ersten Trocknungskammer (3f), in die die feuchte Warenbahn (5) in den Trocknungsofen (1) eintritt, ausgeblasen oder abgesaugt wird, wobei die Umwälzung der Luft in jeder der Trocknungskammern (3a-3f) durch jeweils ein der betreffenden Kammer zugeordnetes kammerinternes Luftumwälzgebläse (G) erfolgt und das Einblasen oder Einsaugen trockener Luft in die letzte Trocknungskammer (3a) oder das Ausblasen oder Absaugen der Luft aus der ersten Trocknungskammer (3f) durch mindestens ein weiteres Gebläse (13) erfolgt, **dadurch gekennzeichnet, dass** die Menge der durch den Trocknungsofen (1) transportierten Luft in Abhängigkeit der Abluftfeuchtigkeit geregelt wird.

2. Verfahren nach Anspruch 1, **dadurch gekennzeichnet, dass** unabhängig von der Regelung der Menge der durch den Trocknungsofen transportierten Luft die Menge der in jeder Trocknungskammer umgewälzten Luft in Abhängigkeit von der Ablufttemperatur geregelt wird.

3. Verfahren nach Anspruch 1 oder 2, **dadurch gekennzeichnet, dass** die in den Trocknungsofen (1) eintretende Luft vor dem Eintritt und/oder in der letzten Trocknungskammer (3a) und/oder in einer oder mehreren nachfolgenden Trocknungskammern (3b-3f) erwärmt wird.

4. Verfahren nach einem der Ansprüche 1, 2 oder 3, **dadurch gekennzeichnet, dass** die Luft in der ersten Trocknungskammer (3f) nicht aufgeheizt wird und die aus den anderen Trocknungskammern (3a bis 3e) ankommende feuchte Luft zur Aufwärmung der in den Trocknungsofen (1) eintretenden Warenbahn (5) in der eintrittsseitigen Trocknungskammer (3f) benutzt wird.

5. Verfahren nach Anspruch 4, **dadurch gekennzeichnet, dass** die Luftzirkulation in der Warenbahn-eintrittsseitigen ersten Trocknungskammer (3f) so geregelt wird, dass die Temperatur der Luft in dieser Trocknungskammer (3f) durch den Kontakt mit der kalten Warenbahn (5) bis zur gewünschten Temperatur abgekühlt wird.

6. Verfahren nach einem der Ansprüche 1 bis 5, **dadurch gekennzeichnet, dass** durch ein weiteres Gebläse die Luft aus der ersten Trocknungskammer (3f) abgesaugt wird, derart, dass der Druck in jeder Trocknungskammer (3a - 3f) tiefer ist als der Umgebungsdruck.

7. Trocknungsofen (1) zur Durchführung des Verfahrens nach den Ansprüchen 1 bis 6, umfassen mehrere in Serie geschaltete Trocknungskammern (3a-3f) mit je einem Kammerinternen Luftumwälzgebläse (G) und je einem Heizelement (H) zur Erzeugung einer vorgebbaren Kammertemperatur T1 - Tx sowie mindestens eine Luftzutrittsöffnung, um trockene Luft aus der Umgebung anzusaugen, und ein Abluftauslass (15), um feuchte Luft an die Umgebung abzugeben, wobei der Trocknungsofen (1) nur einen Abluftauslass (15) hat und dieser Abluftauslass (15) an der ersten Trocknungskammer (3f) angeordnet ist, in welcher die Warenbahn (5) in den Trocknungsofen (1) eintritt, wobei der mindestens einen Luftzutrittsöffnung oder dem Abluftauslass (15) mindestens ein weiteres Gebläse (13) zugeordnet ist, **dadurch gekennzeichnet, dass** der Trocknungsofen (1) ausgeführt ist, die Menge der durch den Trocknungsofen (1) transportierten Luft in Abhängigkeit der Abluftfeuchtigkeit zu regeln.

8. Trocknungsofen nach Anspruch 7, wobei der Trocknungsofen (1) ausgeführt ist, unabhängig von der Menge der durch den Trocknungsofen (1) transportierten Luft die Menge der in jeder Trocknungskammer umgewälzten Luft in Abhängigkeit von der Ablufttemperatur zu regeln.

9. Trocknungsofen nach Anspruch 7 oder 8, **dadurch gekennzeichnet, dass** die Luftzutrittsöffnung (13) an der letzten Trocknungskammer (3a) angeordnet ist, aus welcher die Warenbahn (5) den Trocknungsofen verlässt.

10. Trocknungsofen nach einem der Ansprüche 7, 8 oder 9, **dadurch gekennzeichnet, dass** zwischen den einzelnen Trocknungskammern (3a-3f) vorzugsweise schlitzförmige Verbindungsöffnungen (7a-7e) für den Durchtritt der Luft von Kammer zu Kammer angeordnet sind.

11. Trocknungsofen nach einem der Ansprüche 7 bis 10, **dadurch gekennzeichnet, dass** die Heizelemente (Ha-Hf) in den Trocknungskammern (3a-3f) unabhängig voneinander regulier-und ausschaltbar sind.

12. Verwendung der Vorrichtung nach einem der Ansprüche 7 bis 11 zum Trocknen eines Warenbahn (5), wobei die erste Trocknungskammer (3f) der Vorrichtung als Wärmerückgewinnungsvorrichtung zur Übertragung von Abluftenergie aus den anderen Trocknungskammern (3a-3e) auf die eintretende Warenbahn (5) dient.

## Claims

1. Method for drying a web of endless fabric (5) in a drying oven (1) with several drying chambers or drying regions (3) connected in series one behind the other, in which drying chambers or drying regions air sucked in from the environment is heated and circulated in order to dehumidify the web of endless fabric (5) and to discharge used humid air to the environment, wherein the web of endless fabric (5) passes, carried by a means of transport, through one drying chamber or drying region (3) after another and wherein dry air is blown into or sucked into the last drying chamber (3a), from which the web of endless fabric (5) leaves the drying oven (1), and heated and circulated and subsequently conveyed from the last drying chamber (3a) to one subsequent drying chamber after another (3b to 3f) and circulated in each of the subsequent drying chambers before the air blown in or sucked in at the last drying chamber (3a) is blown out or sucked out at the first drying chamber (3f), where the humid web of endless fabric (5) enters the drying oven (1), wherein the air is circulated in each of the drying chambers (3a to 3f) by one air circulation fan (G) each, each air circulation fan being assigned to the respective chamber and internal to the chamber, and at least one further fan (13) blows or sucks dry air into the last drying chamber (3a) or blows or sucks the air out of the first drying chamber (3f), **characterized in that** the amount of air transported through the drying oven (1) is controlled depending on the humidity of exhaust air.

2. Method according to claim 1, **characterized in that** independently of the control of the amount of air transported through the drying oven, the amount of air circulated in each drying chamber is controlled depending on the temperature of exhaust air.

3. Method according to claim 1 or 2, **characterized in that** the air entering the drying oven (1) is heated prior to entering and/or in the last drying chamber (3a) and/or in one or several subsequent drying chamber/s (3b to 3f).

4. Method according to any one of claims 1, 2 or 3, **characterized in that** the air in the first drying chamber (3f) is not heated and the humid air arriving from the other drying chambers (3a to 3e) is used to heat, in the entrance-side drying chamber (3f), the web of endless fabric (5) entering the drying oven (1).

5. Method according to claim 4, **characterized in that** air circulation in the first drying chamber (3f) located on the entrance side of the web of endless fabric is controlled in such a manner that the temperature of the air in this drying chamber (3f) is cooled down to the desired temperature due to the contact with the cold web of endless fabric (5).

6. Method according to any one of claims 1 to 5, **characterized in that** the air is sucked out of the first drying chamber (3f) by a further fan in such a manner that the pressure in each drying chamber (3a to 3f) is lower than ambient pressure.

7. Drying oven (1) for carrying out the method according to claims 1 to 6, comprising several series-connected drying chambers (3a to 3f) with one air circulation fan (G) each, each air circulation fan being internal to the chamber, and with one heating element (H) each for generating a predeterminable chamber temperature T1 to Tx as well as at least one air admission opening for sucking dry air in from the environment and an exhaust air exit (15) for discharging humid air to the environment, wherein the drying oven (1) has only one exhaust air exit (15) and this exhaust air exit (15) is arranged at the first drying chamber (3f), where the web of endless fabric (5) enters the drying oven (1), wherein at least one further fan (13) is assigned to the at least one air admission opening or to the exhaust air exit (15), **characterized in that** the drying oven (1) is designed to control the amount of air transported through the drying oven (1) depending on the humidity of exhaust air.

8. Drying oven according to claim 7, wherein the drying oven (1) is designed to control, independently of the amount of air transported through the drying oven (1), the amount of air circulated in each drying chamber depending on the temperature of exhaust air.

9. Drying oven according to claim 7 or 8, **characterized in that** the air admission opening (13) is arranged at the last drying chamber (3a), from which the web of endless fabric (5) leaves the drying oven.

10. Drying oven according to any one of claims 7, 8 or 9, **characterized in that** preferably slot-shaped connecting apertures (7a to 7e) for the passage of the air from chamber to chamber are arranged between the individual drying chambers (3a to 3f).

11. Drying oven according to any one of claims 7 to 10, **characterized in that** the heating elements (Ha to Hf) in the drying chambers (3a to 3f) can be regulated and switched off independently of each other.

12. Use of the apparatus according to any one of claims 7 to 11 for drying a web of endless fabric (5), wherein the first drying chamber (3f) of the apparatus serves as a heat recovery device for transferring exhaust air energy from the other drying chambers (3a to 3e) to the entering web of endless fabric (5).

## Revendications

1. Procédé de séchage d'une bande de matériau (5) dans un four de séchage (1) avec plusieurs chambres ou zones de séchage (3) disposées en série les unes derrière les autres, dans lesquelles de l'air aspiré à partir de l'environnement est réchauffé et mis en circulation pour extraire de l'humidité de la bande de matériau (5) et rejeter dans l'environnement l'air humide usé, la bande de matériau (5), portée par un moyen de transport, traversant successivement les chambres ou zones de séchage (3), et l'air sec étant insufflé ou aspiré, réchauffé et mis en circulation dans la dernière chambre de séchage (3a) à partir de laquelle la bande de matériau (5) quitte le four de séchage (1), et conduit ensuite à partir de la dernière chambre de séchage (3a) successivement aux chambres de séchage (3b à 3f) suivantes et mis en circulation respectivement dans celles-ci avant que l'air insufflé ou aspiré au niveau de la dernière chambre de séchage (3a) soit expulsé ou aspiré au niveau de la première chambre de séchage (3f) dans laquelle la bande de matériau (5) humide entre dans le four de séchage (1), la mise en circulation de l'air étant effectuée dans chacune des chambres de séchage par respectivement un ventilateur de circulation d'air (G) interne aux chambres affecté à la chambre concernée, et l'insufflation ou l'aspiration de l'air sec dans la dernière chambre de séchage (3a) ou l'expulsion ou l'aspiration de l'air hors de la première chambre de séchage (3f) étant effectué par au moins un autre ventilateur (13), **caractérisé en ce que** la quantité d'air transportée à travers le four de séchage (1) est régulée en fonction de l'humidité de l'air d'échappement.

2. Procédé selon la revendication 1, **caractérisé en ce que**, indépendamment de la régulation de la quantité d'air transportée à travers le four de séchage, la quantité d'air mise en circulation dans chaque chambre de séchage est régulée en fonction de la température de l'air d'échappement.

3. Procédé selon la revendication 1 ou 2, **caractérisé en ce que** l'air entrant dans le four de séchage (1) est réchauffé avant l'entrée et/ou dans la dernière chambre de séchage (3a) et/ou dans une ou plusieurs chambres de séchage (3b - 3f) suivantes.

4. Procédé selon l'une des revendications 1, 2 ou 3, **caractérisé en ce que** l'air n'est pas chauffé dans la première chambre de séchage (3f) et **en ce que** l'air humide qui arrive en provenance des autres chambres de séchage (3a à 3e) est utilisé dans la chambre de séchage (3f) côté entrée pour le réchauffage de la bande de matériau (5) entrant dans le four de séchage (1).

5. Procédé selon la revendication 4, **caractérisé en ce que** la circulation d'air dans la première chambre de séchage (3f) côté entrée de la bande de matériau est régulée de telle sorte que la température de l'air dans cette chambre de séchage (3f) est refroidie jusqu'à la température souhaitée par le contact avec la bande de matériau (5) froide.

6. Procédé selon l'une des revendications 1 à 5, **caractérisé en ce que** l'air en provenance de la première chambre de séchage (3f) est aspiré par un autre ventilateur de telle sorte que la pression dans chaque chambre de séchage (3a - 3f) est plus faible que la pression ambiante.

7. Four de séchage (1) destiné à la réalisation du procédé selon les revendications 1 à 6, comprenant plusieurs chambres de séchage (3a - 3f) disposées en série ayant chacune un ventilateur de circulation d'air (G) interne aux chambres et chacune un élément chauffant (H) pour la production d'une température de chambre paramétrable T1 - Tx ainsi qu'au moins un ouverture d'arrivée d'air afin aspirer de l'air sec à partir de l'environnement, et une sortie d'air d'échappement (15) pour délivrer l'air humide à l'environnement, le four de séchage (1) n'ayant qu'une sortie d'air d'échappement (15), et cette sortie d'air d'échappement (15) étant disposée au niveau de la première chambre de séchage (3f) dans laquelle la bande de matériau (5) entre dans le four de séchage (1), au moins un autre ventilateur (13) étant affecté à l'ouverture d'arrivée d'air au moins au nombre de un ou à la sortie d'air d'échappement (15), **caractérisé en ce que** le four de séchage (1) est réalisé pour réguler la quantité d'air transportée à travers le four de séchage (1) en fonction de l'humidité de l'air d'échappement.

8. Four de séchage (1) selon la revendication 7, le four de séchage (1) étant réalisé pour, indépendamment de la quantité d'air transportée à travers le four de séchage (1), réguler la quantité d'air mise en circulation dans chaque chambre de séchage en fonction de la température de l'air d'échappement.

9. Four de séchage (1) selon la revendication 7 ou 8, **caractérisé en ce que** l'ouverture d'arrivée d'air (13) est disposée au niveau de la dernière chambre de séchage (3a) à partir de laquelle la bande de matériau (5) quitte le four de séchage.

10. Four de séchage (1) selon l'une des revendications 7, 8 ou 9, **caractérisé en ce que**, entre les différentes chambres de séchage (3a - 3f), il est disposé des ouvertures de raccordement (7a - 7e) de préférence en forme de fente pour le passage de l'air de chambre en chambre.

11. Four de séchage (1) selon l'une des revendications 7 à 10, **caractérisé en ce que** les éléments chauffants (Ha - Hf) dans les chambres de séchage (3a - 3f) peuvent être régulés et mis hors circuit indépendamment les uns des autres.

12. Utilisation du dispositif selon l'une des revendications 7 à 11 pour le séchage d'une bande de matériau (5), la première chambre de séchage (3f) du dispositif servant de dispositif de régulation de chaleur pour la transmission, à la bande de matériau (5) entrante, de l'énergie d'air d'échappement en provenance des autres chambres de séchage (3a - 3e).
